# EUROPEAN PATENT SPECIFICATION

(11) **EP 0 649 993 B1**
(45) Date of publication and mention of the grant of the patent: **30.12.1998**
(21) Application number: 94116662.1
(22) Date of filing: 21.10.1994
(51) Int. Cl.: F16D 65/16

(54) **Disk brake**
Scheibenbremse
Frein à disque

(30) Priority: 22.10.1993 JP 61863/93
(43) Date of publication of application: 26.04.1995
(73) Proprietor: NISSHINBO INDUSTRIES, INC., Chuo-ku, Tokyo 103 (JP)
(72) Inventor: Tatsumi, Yoshihiro, c/o Nisshinbo Ind.Inc., Nagoya-shi, Aichi (JP); Toriyama, Noriyuki, c/o Nisshinbo Ind.Inc., Nagoya-shi, Aichi (JP); Harinaga, Toshiyuki, c/o Nisshinbo Ind.Inc., Nagoya-shi, Aichi (JP); Fukuda, Masataka, c/o Nisshinbo Ind.Inc., Nagoya-shi, Aichi (JP)
(74) Representative: Henkel, Feiler, Hänzel

(56) References cited:
- DE-A- 4 217 983
- GB-A- 1 555 013
- GB-A- 2 165 903
- US-A- 3 643 763
- US-A- 5 000 294

## Description

### FIELD OF THE INVENTION

This invention relates to a disk brake as defined by the features of the preamble of claim 1.

### DESCRIPTION OF THE PRIOR ART

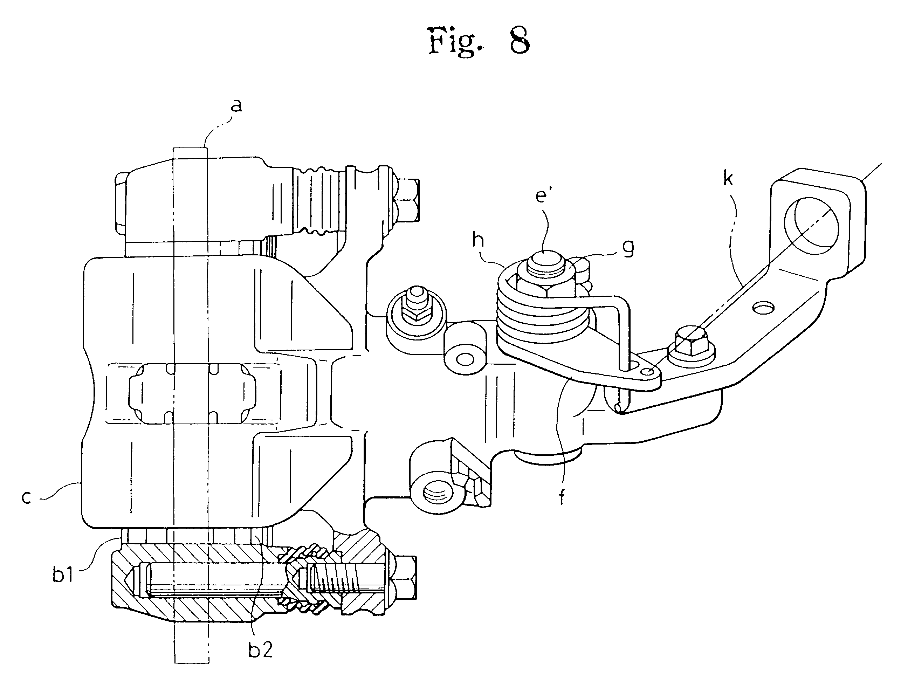

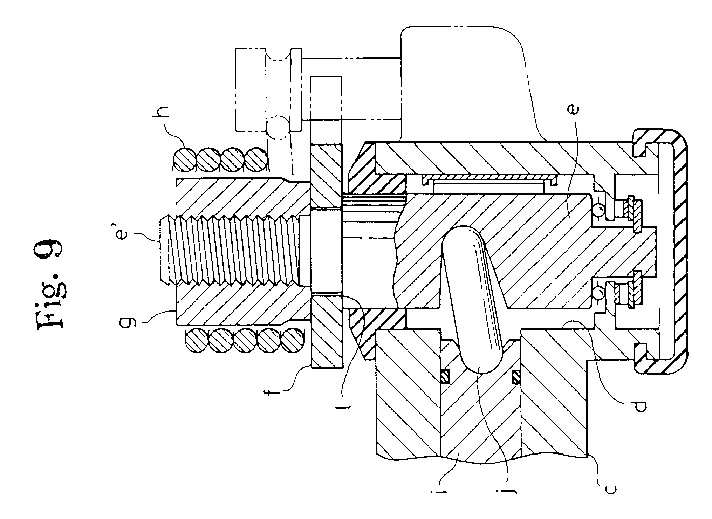

A conventional disk brake is shown in Figs. 8 and 9. A similar disk brake of this type is disclosed in GB-2 165 903A. Both sides of a rotor (a) as shown in Fig. 8, which rotates with a wheel, may be brought in contact with friction pads (bl, b2). A caliper (c) is arranged overriding the rotor (a) and the friction pads (bl, b2). A bearing bore (d) as shown in Fig. 9 is provided at the backward of the caliper (c) and a camshaft (e) is installed in the bearing bore (d). A brake lever (f) is attached to an exposed portion (e') of the camshaft (e) and screwed up by a nut (g). A return spring (h) applying a force in a non-operative direction is arranged arround the nut (g). A push rod (j), one end of which is contacted with the camshaft (e) and the other end of which is contacted with a wellknown automatic adjustment device (i) linked with an unillustrated piston contacted with the back side of one of the friction pads (b2), is installed in the bearing bore (d).

As described above, the camshaft (e) is rotated through the brake lever (f) when an operating wire (k) is pulled and the push rod (j) moves the piston forward through the automatic adjustment device. Forward movement of this piston makes one of the friction pads (b2) contact the rotor (a) under pressure, and also the other friction pad (bl) contacts the rotor (a) under pressure by the reaction of it. Thus, the rotor (a) can be applied with the brake force.

The above described conventional disk brake has the following problems.
1) A small clearance, which.occurs at the connection (1) between the brake lever (f) and the camshaft (e), gives a play to the brake lever and it is one reason for lengthening of the lever travel.
2) The nut (g) fixed to the camshaft (e) is getting loose by the above described recess and the worst case the brake lever falls off.
3) The mean coil diameter of the return spring is widening.
4) The assembling process to screw up the nut (g) is additionally necessary and the number of parts is increased.

In another disk brake known from DE 42 17 983 A1 a brake lever is pressed onto a circular circumference of a camshaft which is provided with the known multi-tooth profile. The end of the camshaft slightly protruding beyond the brake lever is completely riveted to fix the brake lever at the camshaft. The multi-tooth profile has the disadvantage that an appropriate mounting position is not clearly defined which leads to more difficult operations during assembly and adjustment of the brake lever. Moreover, the riveted connection makes it very difficult to replace the brake lever for maintenance or service purposes.

### DETAILED DESCRIPTION OF THE INVENTION

The object of this invention is to provide a disk brake which solves the problems related to the known multi-toothed connection between the brake lever and a camshaft and which provides for facilitated assembly, adjustment and maintenance.

According to another aspect the disk brake should solve a lot of problems associated with prior art disk brakes such as getting longer lever travel, falling off of the brake lever, widening of mean coil diameter of the return spring, the complex process of screwing up a nut and increased number of parts.

To solve this object this invention provides a disk brake as defined in claim 1.

Specifically, the invention provides a disk brake comprising a rotor rotatable with a wheel, friction pads located at both sides of the rotor; a caliper overriding a part of the outer circumference of the rotor and the friction pads; a pushing member installed in the caliper for pressing at least one of the friction pads to the rotor; a bearing bore provided within the caliper at the rear side of the pushing member; a camshaft rotatably installed within the bearing bore for moving forward and backward the pushing member, a part of the camshaft being exposed outside of the bearing bore; a brake lever attached and fixed to the exposed part of the camshaft; and a return spring for urging the brake lever in a nonoperative direction; characterized in that said brake lever has a non-circular connecting bore, the shape of which is elliptical or polygon such as square or hexagon, and said exposed part of the camshaft has a connection portion formed in a corresponding non-circular shape and the camshaft is fixed to the brake lever by caulking said connection portion and/or the upper surface of the brake lever-at said connecting bore after the brake lever is installed with its connecting.bore around the connection portion of the camshaft.

Due to this structure, according to which the connection between the brake lever and the camshaft is formed in a non-circular shape and in that either one or both of these members at the connection are caulked, this invention provides the following effects:
1) The loss of lever travel generated by the clearance of the connection between the brake lever and the camshaft can be eliminated.
2) There is no danger of loosening or dropping off of the brake lever as it is firmly fixed to the camshaft.
3) The small mean coil diameter of the return spring makes it possible to minimize the size of the return spring and to use the space around the camshaft.
4) The number of parts can be decreased due to the high efficiency of the assembling process without requiring a screwing up operation.

The preferred embodiments of this invention will be explained with reference to figures as follows.

### BRIEF DESCRIPTION OF THE DRAWINGS

Fig. 1 is a partial cross sectional view of a first embodiment of a camshaft of a caliper.

Fig. 2 is a plan view of the device of Fig. 1.

Fig. 3 is an enlarged cross sectional view of a caulked brake lever side.

Fig. 4 is a plan view of a second embodiment of a camshaft.

Fig. 5 is an enlarged cross sectional view of a caulked camshaft side.

Fig. 6 is a plan view of a third embodiment of a camshaft.

Fig. 7 is an enlarged cross sectional view of a caulked brake lever and a caulked camshaft.

Fig. 8 is an aspect view of a conventional disk brake device.

Fig. 9 is a cross sectional view of a conventional camshaft.

### DETAILED DESCRIPTION OF THE PREFERRED EMBODIMENTS

### EXAMPLE 1

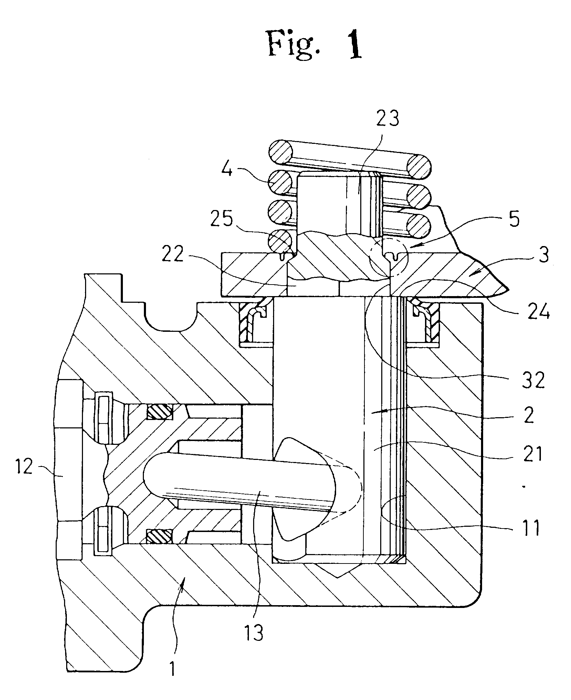

Part number 1 in Fig. 1 shows the rear end of a caliper arranged overriding a rotor and brake pads, wherein a bearing bore 11 is designed within the rear end of the caliper 1. A camshaft 2, a part of which is exposed, is rotatably installed in the bearing bore 11.

A brake lever 3 is non-rotatably connected with the bottom of the camshaft 2, and a return spring 4 applying a force in the non-operative direction of the brake lever 3 is fitted around the top of the exposed part of the camshaft 2.

A push rod 13, both ends of which are contacted with the camshaft 2 and an adjust bolt 12 respectively, is installed between the bore for the camshaft 2 and the adjust bolt 12, which is linked with a piston contacted with the back of the brake pad.

The pressed members of the friction pads are enough to transmit the motion of the camshaft to the friction pad, while it is not always necessary that such component usually comprises the adjustable bolt 12, the push rod 13 and the piston.

Therefore, when the camshaft 2 is rotated by operation of the brake lever 3, the push rod 13 moves the piston forward through the adjustable bolt 12 and one of the friction pads is contacted with the rotor by this forward movement of the piston and another friction pad is also contacted with pressure with the rotor by the reaction force. Therefore, the brake force can be applied on the rotor.

As illustrated in Fig. 1, the camshaft 2 comprises a columnar portion 21, rotatably installed in the bearing bore 11, a connection portion 22 located at the outer exposed portion of the bearing bore 11 and a support portion 23. The connection portion 22 has a smaller outer shaped non-circular sectional face than the outer shaped part of the columnar portion 21. As the non-round sectional shape such variable shapes as a square and an ellipse may be admitted. In a word, those shapes are allowable which fasten the brake lever 3 for rotation of the camshaft 2.

The support portion 23 has a smaller collumnar shape than the connection portion 22 and it supports with fixturing around the return spring 4.

The differences of dimension of the external form between the columnar portion 21 and the connection portion 22 and the support portion 23 form steps 24, 25 respectively at the connecting areas.

It is not necessary to form the step 24 at the connection between the columnar portion 21 and the connection portion 22 by means of making smaller the external dimension of the connection portion 22 than that of the columnar portion 21 as described above.

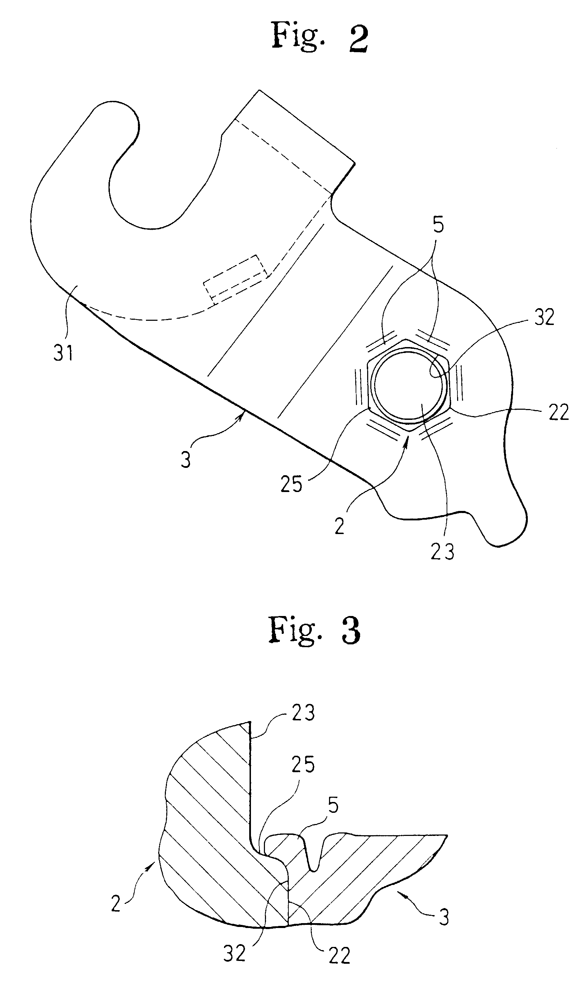

As shown in Fig. 2, the brake lever 3 is a plate which has a hook or claw member 31 at one end and a bore 32 for connecting with the camshaft 2 at another end.

The shape of the connecting bore 32 is the same form as the sectional shape of the connection portion 22 of the camshaft 2 and is non-circular like, as described above, square or ellipse. In addition, the size of the connecting bore 32 is a little smaller than the external size of the connection portion 22 of the camshaft 2.

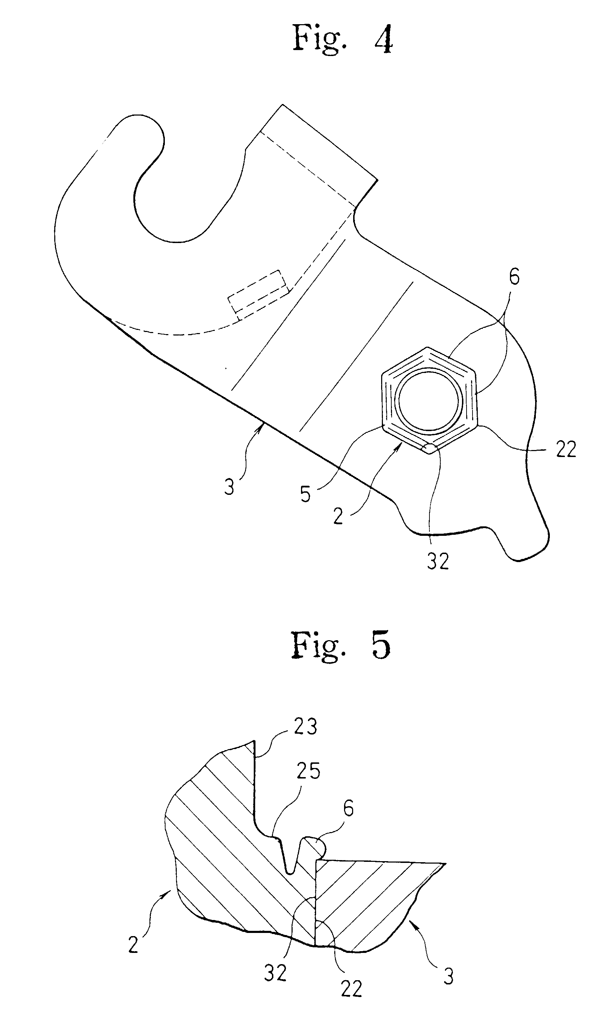

The connection portion 22 of the camshaft 2 is connected with the connecting bore 32 of the brake lever 3 and the down face of the brake lever 3 is fitted to the difference level or step 24. After caulking the round of at least one of the connection portion 22 and/or of the connecting bore 32, the camshaft 2 is fixed with the brake lever 3. When caulking a side of the brake lever 3, as illustrated in Figs. 2 and 3, the caulking area 5 is formed by striking with such a tool as a wedged shape. Forming the caulking area 5 closes a gap between the camshaft 2 and the brake lever and the camshaft 2 can be firmly fastened to the brake lever 3.

The level of the upper face of the brake lever 3 should be designed to be a little bit higher than that of the stepped face so as to locate the deformation on the stepped face 25. The caulked portion 5 may be done all around or at a part of the connecting bore and can take a number of caulkings. Additionally the way of caulking may deform the end of the connecting bore 32 or the connection portion.

### EXAMPLE 2

Figs. 4 and 5 are examples of the caulked side of the connection of the camshaft 2 and the caulked portion 6 is formed by way of striking into the stepped face 25 of upper face of the connection portion 22 with a tool. By taking this way, the area of the stepped face 25 of the connection portion 22 should be a little bit wider and the level of the upper face of the brake lever 3 should be designed to be lower than the face of the step 25.

### EXAMPLE 3

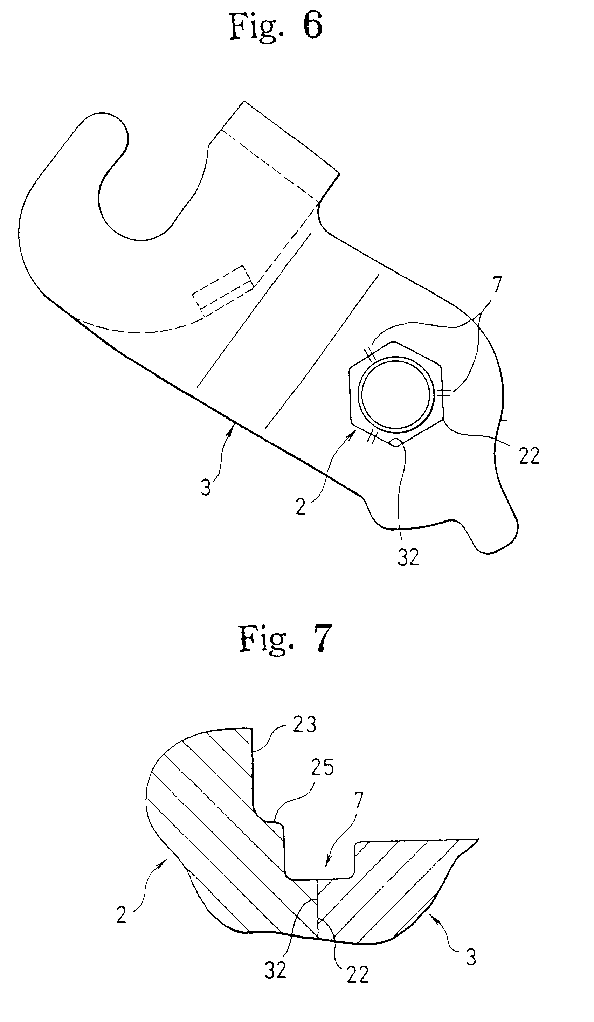

Figs. 6 and 7 are examples qf caulking both the connection portion 22 and the connecting bore 32 and the caulked portion 7 is formed by way of striking a tool into the both members approximately in the vertical direction of their face.

## Claims

1. A disk brake comprising
a rotor rotatable with a wheel,
friction pads located at both sides of the rotor;
a caliper (1) overriding a part of the outer circumference of the rotor and the friction pads;
a pushing member (13) installed in the caliper (1) for pressing at least one of the friction pads to the rotor;
a bearing bore (11) provided within the caliper at the rear side of the pushing member (13);
a camshaft (2) rotatably installed within the bearing bore (11) for moving forward and backward the pushing member (13), a part of the camshaft (2) being exposed outside of the bearing bore (11);
a brake lever (3) attached and fixed to the exposed part of the camshaft (2); and
a return spring (4) for urging the brake lever (3) in a nonoperative direction;
characterized in that
said brake lever (3) has a non-circular connecting bore (32), the shape of which is elliptical or polygon such as square or hexagon, and said exposed part of the camshaft (2) has a connection portion (22) formed in a corresponding non-circular shape and
the camshaft (2) is fixed to the brake lever (3) by caulking said connection portion (22) and/or the upper surface of the brake lever (3) at said connecting bore (32) after the brake lever (3) is installed with its connecting bore (32) around the connection portion (22) of the camshaft (2).

2. The disk brake according to claim 1, characterized in that the connection portion (22) of the exposed part of the camshaft (2) comprises first and second stepped portions (24,25) adjacent the connection portion (22), wherein the first stepped portion (24) is located at the lower surface level of the brake lever (3) and the second stepped portion (25) is located slightly above or below the upper surface level of the brake lever (3) and caulking is performed at the second stepped portion (25) and/or at the upper surface of the brake lever (3).

3. The disk brake according to claim 1 or 2, characterized in that the caulking is performed all around the non-circular connection or at a part of the non-circular connection.

## Patentansprüche

1. Scheibenbremse, umfassend:
eine mit einem Rad mitdrehbare Bremsscheibe,
auf beiden Seiten der Bremsscheibe gelegene Reib-Bremsklötze,
einen einen Teil des Außenumfangs des Bremsscheibes und der Reib-Bremsklötze umgreifenden Bremssattel (1),
ein in den Bremssattel (1) eingebautes Presselement (13) zum Anpressen mindestens eines der Bremsklötze an die Bremsscheibe,
eine im Bremssattel an der Rückseite des Presselements (13) vorgesehene Lagerbohrung (11),
eine drehbar in der Lagerbohrung (11) geführte Nockenwelle (2) zum Vorwärts- und Rückwärtsbewegen des Preßelements (13), wobei ein Teil der Nockenwelle (2) außerhalb der Lagerbohrung (11) freiliegt,
einen am freiliegenden Teil der Nockenwelle (2) gehalterten und befestigten Bremshebel (3), und
eine Rückholfeder (4) zum Vorbelasten des Bremshebels (3) in eine unwirksame Richtung,
dadurch gekennzeichnet, daß
der Bremshebel (3) eine nicht-kreisförmige Verbindungsbohrung (32) aufweist, deren Form elliptisch oder mehreckig, z.B. quadratisch oder sechseckig ist, und der freiliegende Teil der Nockenwelle (2) einen mit einer entsprechenden nicht-kreisförmigen Form ausgebildeten Verbindungsabschnitt (22) aufweist, und
die Nockenwelle (2) nach dem Anbau des Bremshebels (3) mit seiner Verbindungsbohrung (32) um den Verbindungsabschnitt (22) der Nockenwelle (2) herum am Bremshebel (3) durch eine Verstemmung des Verbindungsabschnitts (22) und/oder der oberen Fläche des Bremshebels (3) befestigt (worden) ist.

2. Scheibenbremse nach Anspruch 1, dadurch gekennzeichnet, daß
der Verbindungsabschnitt (22) des freiliegenden Teils der Nockenwelle (2) an den Verbindungsabschnitt (22) angrenzende, erste und zweite Stufenabschnitte (24,25) umfaßt, wobei der erste Stufenabschnitt (24) auf Höhe der unteren Fläche des Bremshebels (3) gelegen ist und der zweite Stufenabschnitt (25) geringfügig oberhalb oder unterhalb der Höhe der oberen Fläche des Bremshebels (3) gelegen ist, und eine Verstemmung am zweiten Stufenabschnitt (25) und/oder an der oberen Fläche des Bremshebels (3) ausgeführt ist.

3. Scheibenbremse nach Anspruch 1 oder 2, dadurch gekennzeichnet, daß die Verstemmung um die gesamte nicht-kreisförmige Verbindung oder an einem Teil der nicht-kreisförmigen Verbindung ausgeführt ist.

## Revendications

1. Un disque de frein comprenant
un disque rotatif avec une roue,
des plaquettes de frein situées des deux côtés du disque ;
un étrier (1) chevauchant en partie le périmètre extérieur du disque et les plaquettes de frein ;
une pièce de poussée (13) agencée dans l'étrier (1) pour appuyer au moins l'une des plaquettes de frein sur le disque ;
un coussinet (11) ménagé dans l'étrier du côté arrière de la pièce de poussée (13) ;
un arbre à came (2) tournant à l'intérieur du coussinet (11) pour déplacer en avant et en arrière la pièce de poussée (13), une partie de l'arbre à came (2) étant à découvert hors du coussinet (11) ;
un levier de frein (3) attaché et fixé sur la partie à découvert de l'arbre à came ; et
un ressort de rappel (4) pour ramener le levier de frein (3) dans une position neutre ;
caractérisé en ce que
ledit levier de frein (3) présente une lumière d'assemblage (32), dont la forme est elliptique ou polygonale, telle que carrée ou hexagonale, et ladite partie à découvert de l'arbre à came (2) présente une zone d'assemblage (22) de forme complémentaire non-circulaire et
l'arbre à came (2) est fixé au levier de frein (3) par matage de ladite zone d'assemblage (22) et/ou de la surface supérieure du levier de frein (3) sur la lumière d'assemblage (32) après que le levier de frein (3) ait été mis en place, la lumière d'assemblage (32) entourant la zone d'assemblage (22) de l'arbre à came (2).

2. Le disque de frein selon la revendication 1, caractérisé en que la zone d'assemblage (22) de la partie à découvert de l'arbre à came (2) comporte des premier et second épaulements (24,25) adjacents à la zone d'assemblage (22), dans laquelle le premier épaulement (24) est situé sur la surface inférieure du levier de frein (3), et le second épaulement (25) est situé légèrement au dessus ou dessous la surface supérieure du levier de frein (3) et le matage est effectué sur le deuxième épaulement (25) et/ou sur la surface supérieure du levier de frein (3).

3. Le disque de frein selon la revendication 1 ou 2, caractérisé en ce que le matage est effectué tout autour de l'assemblage non-circulaire ou sur une partie de l'assemblage non-circulaire.
